Europäisches Patentamt

European Patent Office

Office européen des brevets

(19)

(11) **EP 1 053 588 B1**

(12) **EUROPÄISCHE PATENTSCHRIFT**

(45) Veröffentlichungstag und Bekanntmachung des Hinweises auf die Patenterteilung:
**24.07.2002   Patentblatt 2002/30**

(51) Int Cl.$^7$: **H02M 1/00**

(21) Anmeldenummer: **98966986.6**

(86) Internationale Anmeldenummer:
**PCT/EP98/08471**

(22) Anmeldetag: **24.12.1998**

(87) Internationale Veröffentlichungsnummer:
**WO 99/35733 (15.07.1999 Gazette 1999/28)**

(54) **VERFAHREN ZUR ERSTELLUNG VON STELLBEFEHLEN FÜR STROMRICHTER**

METHODS FOR ESTABLISHING CONTROL COMMANDS FOR ELECTRONIC POWER CONVERTERS

PROCEDES POUR ETABLIR DES INSTRUCTIONS DE REGLAGE POUR REDRESSEURS

(84) Benannte Vertragsstaaten:
**AT CH DE FR IT LI**

(30) Priorität: **08.01.1998  DE 19801026**

(43) Veröffentlichungstag der Anmeldung:
**22.11.2000   Patentblatt 2000/47**

(73) Patentinhaber: **Bombardier Transportation GmbH
13627 Berlin (DE)**

(72) Erfinder: **BÖCKER, Joachim
D-12347 Berlin (DE)**

(74) Vertreter: **Cohausz & Florack Patentanwälte
Postfach 33 02 29
40435 Düsseldorf (DE)**

(56) Entgegenhaltungen:
**DE-C- 19 523 731**

- **MEYER M ET AL: "A HYSTERESIS CURRENT CONTROL FOR PARALLEL CONNECTED LINE-SIDE CONVERTERS OF AN INVERTER LOCOMOTIVE" CONTROL IN POWER ELECTRONICS, BRIGHTON, SEPT. 13 - 16, 1993, Bd. 4, Nr. CONF. 5, 13. September 1993, Seiten 102-109, XP000427058 INSTITUTION OF ELECTRICAL ENGINEERS in der Anmeldung erwähnt**

**Beschreibung**

Die Erfindung betrifft ein Verfahren zur Erzeugung von Stellbefehlen für einen modular aufgebauten Stromrichter. Ein solcher Stromrichter kann z.B. als Mehrsystem-Bordnetzumrichter von Reisezugwagen eingesetzt werden.

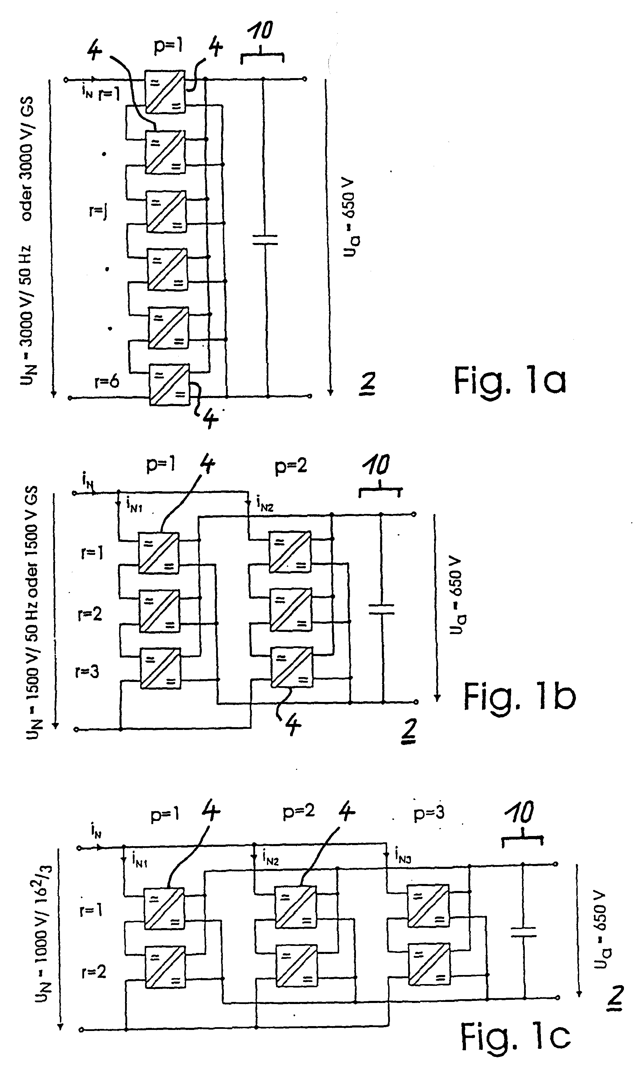

In Europa sind verschiedene Spannungssysteme für die Energieversorgung elektrischer Bahnen anzutreffen. Dabei werden für den durchgehenden, systemüberschreitenden Bahnverkehr nicht nur Mehrsystem-Lokomotiven, sondern auch Mehrsystem-Reisezugwagen benötigt. Hierzu wurde bereits ein Mehrsystem-Bordnetzumrichter für Reisezugwagen konzipiert. (Prospekt der Fa. ADtranz : Mehrsystem-Energieversorgung für RIC- Speisewagen, EVB 5/100; 11.1997) Durch den Aufbau dieses Umrichters aus sechs Modulen kann der Umrichter durch entsprechende Konfiguration: 1 Parallelzweig p = 1 mit 6 Modulen in Reihenanordnung r = 1...6, 2 Parallelzweige p = 1, 2 mit je 3 Modulen in Reihenanordnung r = 1...3 oder 3 Parallelzweige p = 1...3 mit je 2 Modulen in Reihenanordnung r= 1, 2, sehr gut an die verschiedenen Spannungssysteme angepaßt werden **(Fig. 1a bis 1c)**. Unabhängig von der Eingangsspannung $u_N$ wird am Umrichterausgang eine konstante Ausgangsspannung $u_a$ für die Bordnetzversorgung bereitgestellt, wobei im Gleichspannungsfall der Stromrichter direkt aus dem Gleichspannungsnetz und im Wechselspannungsfall über den Lokomotivtransformator aus dem Netz oder vom Generator einer Diesellokomotive gespeist wird.

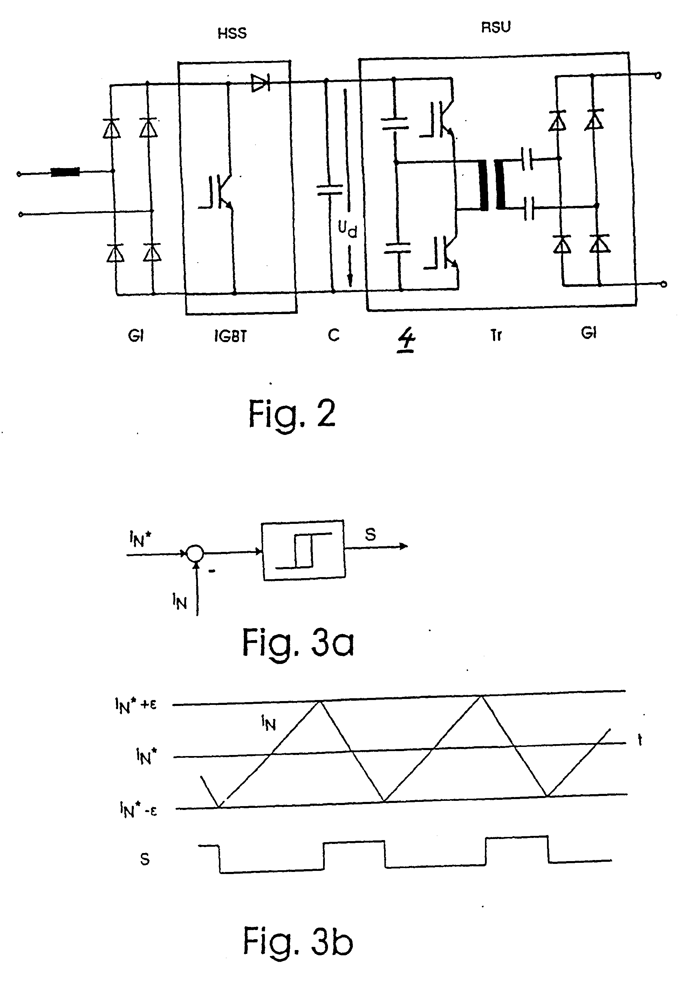

Eine mögliche Detailstruktur eines z.B. 6 Module umfassenden Stromrichters der eingangs genannten Art ist in **Fig. 2** näher dargestellt. Eingangsseitig sind je Modul z.B. ein ungesteuerter Gleichrichter GI und ein Hochsetzsteller HSS angeordnet, welcher einen internen Gleichspannungszwischenkreis mit einem Zwischenkreiskondensator C speist. Ein Reihenschwingkreisumrichter RSU, der sich makroskopisch wie ein Gleichspannungsübertrager verhält, setzt die Zwischenkreisspannung un mittels eines Transformators Tr und eines Gleichrichters GI zu der Modulausgangsspannung um Wesentliche Aufgabe einer Regelung für einen solchen Stromrichter ist es, die Ausgangsspannung ua am Bordnetzumrichter möglichst unabhängig von Last- oder Netzbedingungen auf einem konstanten Sollwert zu halten. Hierfür stehen der Regelung als Stellglieder die 6 Module, also im zuvor beschriebenen Fall die Hochsetzsteller HSS der 6 Module, und als Stellgrößen die Stellbefehle S zum Schalten der Hochsetzsteller HSS der 6 Module, dies sind insgesamt 6 binäre Größen, zur Verfügung. Die Reihenschwingkreisumrichter RSU aller 6 Module werden rein gesteuert mit Stellbefehlen konstanter Taktverhältnisse betrieben. Diese Stellbefehle sollen für die Regelung des Gesamtsystems nicht verwendet werden.

Nebenher muß die Stromrichter-Regelung dafür sorgen, daß externe Anforderungen, wie maximal zulässige spektrale Grenzwerte für den Netzstrom, Mindest -Leistungsfaktor bei Wechselstrombetrieb, Mindest -Eingangsimpedanz bei Gleichstrombetrieb, erfüllt und interne Beschränkungen, wie maximal zulässige Ströme und maximal zulässige Pulsfrequenz der Module, eingehalten werden.

Erfahrungsgemäß kann mit einer einschleifigen Regelung der Ausgangsspannung $u_a$, die verhältnismäßig langsam und verzögert auf Änderungen der Stellbefehle reagiert, keine ausreichende Regelgüte und Robustheit erreicht werden.

Hingegen hat sich für diese Art von Systemen eine Kaskadenregelung bewährt, bei der der Ausgangsspannungsregelung eine Stromregelung unterlagert wird. Mit einer unterlagerten Stromregelung kann zudem einfacher kontrolliert werden, ob die Ströme im zulässigen Bereich verbleiben.

Die unterlagerte Stromregelung von Stromrichtern durch eine Stromregelung mit Spannungssteuerung (PWM) ist prinzipiell möglich (s. z. B. beim weiter oben angegebenen Stand der Technik). Zur Realisierung würden ein Regelungsprozessor mit einer erheblichen Rechenleistung und eine hohe Schaltfrequenz mit entsprechenden Schaltverlusten der Module benötigt, was die Regelung verteuern würde. Für die Regelung eines als Bordnetzumrichter arbeitenden Stromrichters ist jedoch der Aufwand erheblich geringer zu halten als beispielsweise für die Antriebsregelung einer Lokomotive, wo z.B. PWM- Verfahren eingesetzt werden.

Mit einer Strom-Schaltregelung oder Toleranzbandregelung **(Fig. 3a)** für die unterlagerte Stromregelung hingegen kann auf einen Prozessor zugunsten von programmierbaren Logikbausteinen wie z.B. Electrically Programmable Logic Device (EPLD) oder Field Programmable Gate Array (FPGA) völlig verzichtet werden. Die Stellbefehle S für die Module, also im weiter oben aufgeführten Fall für die Hochsetzsteller HSS der Module werden direkt durch Anstoßen des Gesamt-Iststromes iN an das vorgegebene Toleranzband +ε/-ε für den Stromsollwert $i_N^*$ erzeugt **(Fig. 3b).** Ein weiterer Vorteil der Schaltregelung ist ferner die hohe effektive Regelkreisverstärkung, aus der ein sehr gutes Führungs- und Störverhalten resultiert. Allerdings ist für die Realisierung eine fast verzögerungsfrei wirkende Schaltlogik notwendig.

Aufgrund der genannten Eigenschaften scheint eine Schaltregelung zunächst sehr gut für die hier notwendige Stromregelung geeignet. Es darf aber nicht übersehen werden, daß gegenüber einer einschleifigen Regelung mit einem einzigen Schaltglied sich die hier zu bewältigende Aufgabenstellung um einiges komplexer gestaltet. Die Aufgaben sind:

- Symmetrierung der Teilströme der Parallelzweige
- Symmetrierung der Leistungen der Module innerhalb eines Parallelzweiges
- Versetzte Taktung der Module, Verteilung der Schaltanforderungen auf die einzelnen Module, Erzeugung von z.B. insgesamt 6 Stellbefehlen.

Es gibt in der Literatur einige Ansätze, wie man Stromschaltregelungen auf derartige Stromrichter anwenden kann. Ein Vorschlag zur Regelung von vier parallel geschalteten Vier-Quadrantenstellern einer Lokomotive stellt eine Strategie vor, zu deren Umsetzung aber ein Mikroprozessor unvermeidbar sein dürfte (Meyer, Sonnenmoser: A hysteresis current control for parallel connected line-side converters of an inverter locomotive. Proc. EPE 93. Brighton 1993). Die Realisierung einer Schaltregelung durch einen Mikroprozessor muß jedoch als suboptimal angesehen werden, denn um die Verzögerungszeit der Schaltregelung gering zu halten, muß der Prozessor mit einer gegenüber der Pulsfrequenz recht hohen Abtastrate arbeiten. Hierzu ist eine erhebliche Prozessorleistung und folglich ein sehr kostenaufwendiges Bauelement erforderlich.

Statt dessen sollte eine Schaltregelung zweckmäßigerweise durch eine parallel arbeitende Logik realisiert werden.

Eine derartige Logik kann praktisch wie gewünscht verzögerungsfrei reagieren und bietet durch die Art der Realisierung gegenüber Mikroprozessoren Kostenvorteile.

Hierzu ist aus der DE 195 23 731 C 1 eine Schaltregelung zur Regelung von Vier-Quadrantenstellern in 2- und 3- Level-Technik bekannt, die auf einfachen programmierbaren Logik-Bausteinen wie EPLD oder FPGA beruht. Als Entwurfsmethode werden Zustandsgraphen verwendet. Es zeigt sich aber, daß diese Methode für die Entwicklung einer Schaltregelung für den Einsatz des Stromrichters als Bordnetzumrichter zu unhandlich ist. Dies liegt an der größeren Zahl der zu beherrschenden Schaltzustände. Z.B. kann ein 3-Level-Vier-Quadrantensteller $3^3 = 9$ verschiedene Schaltzustände annehmen (2 Stränge mit je 3 Zuständen), während bei dem als Beispiel angeführten Bordnetzumrichter $2^6 = 64$ Schaltzustände zu beherrschen sind (6 Hochsetzsteller HSS mit je 2 Zuständen).

Aufgabe der Erfindung ist es, die Koordinierung der Module eines modular aufgebauten Stromrichters mit einer einzigen Strom-Schaltregelung zu realisieren. Hierzu soll eine Strategie gefunden werden, die nicht jeden einzelnen Schaltzustand individuell berücksichtigt, sondern stattdessen allgemeine Vorschriften definiert.

Die Aufgabe wird gelöst mit den im Anspruch 1 angegebenen Merkmalen. Vorteilhafte Weiterbildungen der Erfindung geben die Unteransprüche an.

Die Regelung zeichnet sich durch folgende Eigenschaften aus:

- Geregelt wird unmittelbar der Gesamteingangsstrom $i_N$ des Stromrichters, nicht etwa die Teilströme $i_{Nj}$ der einzelnen Module oder Gruppen von Modulen. Auf diese Weise werden auch Netzrückwirkungen, die sich ja über den Gesamtstrom $i_N$ äußern, bestmöglich unter kontrolle gehalten.
- Die allgemein formulierte Schaltstrategie ist sowohl für alle Gruppierungen der Module als auch für Wechsel- und Gleichspannungsbetrieb identisch.

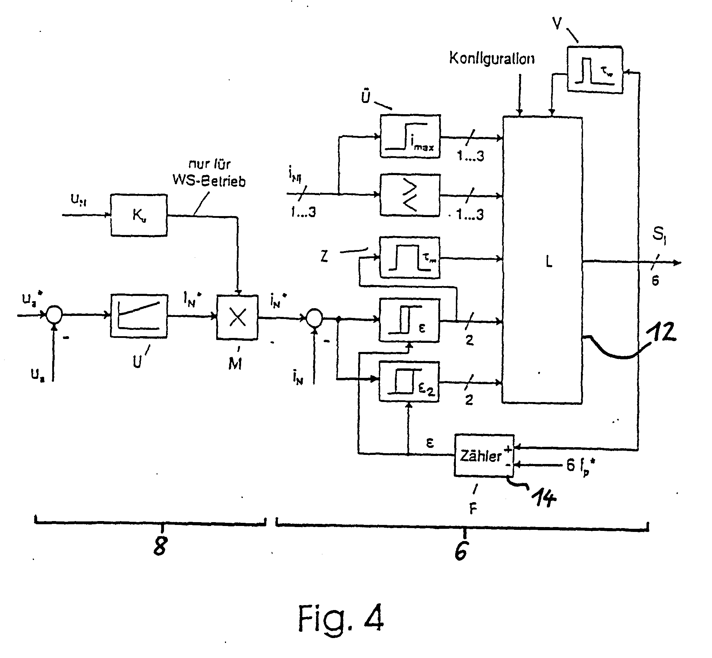

Die Erfindung soll anhand eines Ausführungsbeispiels näher erläutert werden. In der zugehörigen Zeichnung zeigt **Fig. 4** die Gesamtstruktur der Regelung für einen aus 6 Modulen aufgebauten Stromrichter (z.B. einen Mehrsystem-Bordnetzumrichter Zunächst soll die Polarität der Stellbefehle S **(Fig. 3b)** bzw. der Schaltzustände der einzelnen Module (z.B. der Hochsetzsteller HSS gemäß **Fig. 2)** definiert werden. Dabei soll jeweils ein Stellbefehl $S_{pr}$ durch den Zweig p und die Reihenstellung r des jeweiligen Moduls **(Fig. 1a-Fig. 1c)** innerhalb des Zweiges p indiziert werden:

$S_{pr}$ = 1: Steller schaltet die Eingangsspannung (hier: Zwischenkreisspannung) $u_d$ am Eingang durch, d.h. der HSS-IGBT (Insulated Gate Bipolar Transistor) ist nichtleitend.

$S_{pr}$ = 0: Eingangsspannung des Moduls ist Null, d. h. der HSS-IGBT ist leitend und schließt den Eingang kurz.

Eine Strategie muß nun definieren, welches der 6 Module beim Eintreten der Ereignisse:

$$R+; |i_N| > |i_N^* + \varepsilon|,$$

$$R-: |i_N| < |i_N^* - \varepsilon|,$$

(Anstoßen des Gesamtstroms $i_N$ an das Toleranzband $i_N^*$ +ε bzw. -ε, s. **Fig. 3b)** umgeschaltet werden soll.

Die Strategie ist zweistufig:
Zuerst wird bei einem Ereignis R+ oder R- der Parallelzweig p einer Modulgruppe ausgewählt, in welchem eine Umschaltung erfolgen soll. Je nach Konfiguration ist unter einem, zwei, oder drei Parallelzweigen p = 1...3 **(Fig. 1a - Fig. 1c)** auszuwählen. Zwar entartet die Auswahl für den Fall nur eines Zweiges, doch kann auf diese Weise eine generische Strategie für alle Konfigurationen angegeben werden.

In der zweiten Auswahlstufe wird dann innerhalb des gewählten Parallelzweiges p die Reihenstellung r desjenigen Moduls bestimmt, welches umgeschaltet werden soll.

Die Strategie läßt sich recht einfach in folgendem Ablaufschema skizzieren, wobei die Fallunterscheidungen für die Fälle R+ und R- durch das Wort "bzw," kenntlich gemacht sind:

Ereignis R+ bzw. R- ⇒

**a) Parallelzweig p auswählen:**

. Zweig p mit geringster Anzahl von Modulen auswählen, für die der Schaltzustand $S_{pj} = 1$ (Modul eingangsseitig nicht kurzgeschlossen ) bzw. $S_{pj} = 0$ (Modul eingangsseitig kurzgeschlossen) zutrifft;

.. falls mehrere Zweige mit gleicher geringster Anzahl von Modulen vorhanden sind, denjenigen Zweig p mit dem betragsmäßig größten bei R+ bzw. kleinsten bei R- Strom im Parallelzweig $iN_p$ wählen;

**b) Reihenstellung r des Moduls innerhalb des gewählten Zweiges auswählen:**

. Reihenstellung r desjenigen Moduls innerhalb des gewählten Parallelzweiges auswählen, welches sich am längsten im Zustand $S_{pr} = 0$ bei R+ bzw. $S_{pr} = 1$ bei R- befindet.

⇒ **Umschalten des Moduls:**

Stellbefehl für das ausgewählte Modul: $S_{pr} = 1$ bei R+ bzw. $S_{pr} = 0$ bei R- an das Modul geben.

Als Auswahlschritt b sind alternativ folgende Varianten für die Auswahl des umzuschaltenden Moduls realisierbar:

. Reihenstellunger desjenigen Moduls innerhalb des Parallelzweiges auswählen, dessen Ausgangsstrom am größten bei R+ bzw. kleinsten bei R- ist oder

. - bei Verwendung von Umrichtern mit Spannungszwischenkreis als Module - Reihenstellung r desjenigen Moduls innerhalb des Parallelzweiges auswählen, dessen interne Zwischenkreisspannung $u_d$ am größten bei R+ bzw. am kleinsten bei R- ist.

Bei der vorgestellten Strategie werden zur Auswahl des schaltenden Moduls an keiner Stelle arithmetische Operationen benötigt, die die Verwendung eines Prozessors erforderten.

Als schaltauslösendes Ereignis reicht das einfache Anstoßen des Gesamtstromes $i_N$ an das Toleranzband +ε bzw. -ε für einen zuverlässigen Betrieb jedoch noch nicht aus, weshalb in vorteilhafter Weiterbildung der Erfindung bei der Definition der Ereignisse R+ und R- sich noch folgende Modifikationen empfehlen:

- Auch wenn die Schaltlogik L selbst fast verzögerungsfrei reagiert, wird der Gesamtstrom $i_N$ erst nach Verzögerungen, die z.B. durch Impulsverstärker und durch das IGBT-Schaltverhalten bedingt sind, wieder in das Toleranzband +ε bzw. - ε zurückkehren. Nach jeder Umschaltung wird deshalb zweckmäßigerweise für eine gewisse Zeit τw von wenigen 10 μs die Schaltlogik L durch eine Schaltverriegelung V verriegelt, bis ein erneutes gleichartiges Ereignis R+ bzw. R- zugelassen wird. Alternierende Ereignisse R-, R+, R- ... werden unabhängig von dieser Verriegelung jeweils sofort bearbeitet.

- Ein zweites Toleranzband +ε2 bzw. - ε2, welches etwa doppelt so groß gewählt wird wie das erste, verringert ein Überschießen aus dem ersten Toleranzband +ε bzw. - ε, falls während der Verriegelungszeit τw eine hohe Spannungsdifferenz den Gesamtstrom $i_N$ sehr weit aus dem Toleranzbereich +ε bzw. - ε treibt. Wird dieses zweite Toleranzband +ε2 bzw. - ε2 nach dem Ansprechen des ersten Toleranzbandes +ε bzw. - ε erstmalig erreicht, wird eine etwaige Schaltverriegelung V aufgehoben und sofort ein weiteres gleichartiges Ereignis R+ bzw. R-ausgelöst. Danach wird die Schaltverriegelung V neu gestartet.

- Falls die Netzspannung und interne Modul-Zwischenkreisspannungen in bestimmten rationalen Verhältnissen stehen, kann der Gesamtstrom $|i_N|$ sehr lange im Toleranzband +ε bzw. - ε verlaufen, ohne an eine Grenze anzustoßen und eine Umschaltung auszulösen. Auf diese Weise werden längere Stromblöcke in einzelnen Modulen injiziert, die kurzfristig zu kleinen Leistungsasymmetrien der Module untereinander führen können. Durch die Resonanzen des Reihenschwingkreisumrichters RSU im Schaltungsbeispiel für die Module werden diese kleinen Asymmetrien bei passender Länge der Stromblöcke teilweise erheblich verstärkt. Dieser Effekt wird vorteilhafterweise verringert, indem eine Zwangsumschaltung Z ausgelöst wird, wenn der Gesamtstrom länger als eine Zeit τw im Toleranzband +ε bzw. ε ohne anzustoßen verbleibt.

- In Weiterentwicklung der Erfindung wird ein Überstromschutz Ü integriert, in dem im Falle des betragsmäßigen Überschreitens eines Stroms $i_{Np}$ in einem Parallelzweig aus mehreren Modulen über einen zulässigen Maximalwert $i_{ma}$ alle Module des betreffenden Parallelzweiges p in den Zustand $S_p = 1$ geschaltet werden.

Die Schaltfrequenz $f_P$ der Schaltregelung ergibt sich den indirekt aus der Toleranzbandbreite +ε bzw. -ε und den über die Induktivitäten wirkenden Spannungsdifferenzen. Es ist daher zweckmäßig, die Schaltfrequenz $f_p$ in einem geschlossenen Regelkreis zu kontrollieren, wobei es ausreicht, die Summe der Umschaltungen aller 6 Module (6 $f_p$) zu überwachen.

Durch die erfindungsgemäße Schaltstrategie ist sichergestellt, daß die Module innerhalb eines Parallelzweiges p exakt gleich oft geschaltet werden. Mögliche Abweichungen der Schaltfrequenzen $f_p$ der Parallelzweige p untereinander erweisen sich als gering, so daß sie vernachlässigt werden können

Als Schaltfrequenzregler F kann ein I-Glied verwendet werden, daß zweckmäßigerweise als Zähler aufgebaut wird. jede Umschaltung der Stellbefehle $S_1 \dots S_6$ erhöht den Zählerstand, während ein oszillierendes Signal mit der 6-fachen gewünschten Pulsfrequenz den Zähler dekrementiert. Minimal- und Maximalwerte begrenzen den Zählerstand. Die Breite des Toleranzbandes $+\varepsilon$ bzw. $-\varepsilon$ wird über einen Faktor aus dem Zählerstand erzeugt. Der Schaltfrequenzregler F läßt sich zusammen mit der Schaltstrategie auf programmierbaren Logikbauelementen (EPLD, FPGA) für die Schaltlogik L realisieren.

Der Regler zur Regelung der Ausgangsspannung $u_a$ ist der Strom- Schaltregelung überlagert. Der Ausgang des Spannungsreglers U ist ein Stromsollwert $i_N^*$. Bei Gleichspannungsbetrieb kann dieser Stromsollwert $i_N^*$ direkt an den Stromregler weitergegeben werden. Bei Wechselspannungsbetrieb benötigt der Stromregler jedoch einen entsprechend oszillierenden Sollwert, solange der Ausgang des Spannungsreglers im stationären Zustand eine Gleichgröße ist. In diesem Fall muß aus der Gleichgröße ein Wechselsollwert gebildet werden. Hierzu kann der Stromsollwert $i_N^*$ direkt mit einem der Netzspannung proportionalen Signal multipliziert (Multiplizierer M) werden. Der Stromrichter verhält sich dann wie ein ohmscher Verbraucher. Der Strom ist stets proportional zur Netzspannung, nur bei sinusförmiger Spannung ist er sinusförmig. Gleichermaßen kann die Umwandlung in einen sinusförmigen Sollwert auch mit Hilfe eines anderen zur Netzspannung phasensynchronen (vorzugsweise sinusförmigen) Signals vorgenommen werden, was z.B. mit Hilfe einer PLL erzeugt werden könnte.

## Patentansprüche

1. Verfahren zur Erstellung von Stellbefehlen für einen Stromrichter (2) modularer Bauart, dessen eingangsseitig durch Stellbefehle kurzschließbare Module (4) je nach dem vorgefundenen Eingangs-Spannungssystem zum Zwecke der Lieferung einer konstanten Ausgangsspannung in primärseitiger Reihen- und/ oder Parallelschaltung gruppiert und mittels einer einzigen Strom- Schaltregelung (6) der eine Ausgangsspannungsregelung (8) überlagert ist, koordiniert geregelt werden, wobei die Stellbefehle für die Module mit Erreichen eines oberen Grenzwertes
(R+: $| iN | > | iN^* + \varepsilon |$) bzw. eines unteren Grenzwertes (R-: $| iN | < | iN^* - \varepsilon |$) eines in seiner Breite vorgebbaren Toleranzbandes ($2\varepsilon$) für den Stromregelfehler ($iN^* - iN$) des durch den Stromrichter (2) fließenden Gesamtstromes ($iN$) erzeugt werden, mit folgender zweistufigen Strategie zur Auswahl eines Moduls (4) welches beim Erreichen eines der beiden Grenzwerte ($| iN^* + \varepsilon |$ bzw. $| iN^* - \varepsilon |$) umgeschaltet wird:

    **a) Parallelzweig p der Module (4) auswählen:**

    - Zweig p mit der geringsten Anzahl von Modulen (4) auswählen, für die der Schaltzustand "eingangsseitig nicht kurzgeschlossen " ($S_{pj} = 1$ für R+) bzw." eingangsseitig kurzgeschlossen" ($S_{pj} = 0$ für R-) zutrifft.

    - falls mehrere Zweige mit gleicher geringsten Anzahl von Modulen (4) vorhanden sind, für die die zuvor genannten Schaltzustände zutreffen, denjenigen Zweig p auswählen, der von dem betragsmäßig größten für R+ bzw. kleinsten Teilstrom iNp für R- durchflossen wird.

    **b) Reihenstellung r des Moduls (4) innerhalb des gewählten Parallelzweiges p auswählen:**

    - Reihenstellung r desjenigen Moduls (4) auswählen, welches sich bereits am längsten im Zustand "eingangsseitig Kurzgeschlossen" ($S_{pr}=0$ für R+) bzw. "eingangsseitig nicht Kurzgeschlossen" ($S_{pr} = 1$ für R-) befindet,
worauf die Umschaltung des ausgewählten Moduls (4) erfolgt.

2. Verfahren nach Anspruch 1,
**dadurch gekennzeichnet,**
**daß** im Auswahlschritt b für die Auswahl des umzuschaltenden Moduls (4) die Reihenstellung r desjenigen Moduls (4) ausgewählt wird, dessen Ausgangsstrom am größten für R+ bzw. am kleinsten für R- ist.

3. Verfahren nach Anspruch 1,
**dadurch gekennzeichnet,**
**daß** bei Verwendung von Modulen (4), die als Umrichter mit Spannungszwischenkreis (10) aufgebaut sind, im Auswahlschritt b für die Auswahl des umzuschaltenden Moduls (4) die Reihenschaltung r desjenigen Moduls (4) ausgewählt wird, dessen interne Zwischenkreisspannung ud am größten für R+ bzw. am kleinsten für R- ist.

4. Verfahren nach einem der vorhergenden Ansprüche
**dadurch gekennzeichnet,**
**daß** die Schaltlogik L (12) nach jeder Umschaltung eines Moduls (4) für eine vorgebbare Zeitspanne (τw) für ein gleichartiges Anstoßen an das Toleranzband verriegelt wird.

5. Verfahren nach Anspruch 4,
**dadurch gekennzeichnet,**
**daß** ein zweites gegenüber dem ersten Toleranzband (+ε bzw.. -ε) breiteres Toleranzband (+ε2 bzw. -ε2) für den Gesamtstrom (iN) durch den Stromrichter (2) vorgesehen ist, das bei dessen Erreichen unabhängig von einer Verriegelung eine weitere Umschaltung auslöst und so das Überschießen aus dem Toleranzband (+ε bzw. -ε) während der Verriegelungszeitspanne (τw) begrenzt.

6. Verfahren nach einem der vorhergehenden Ansprüche,
**gekennzeichnet durch,**
eine Zwangsumschaltung der Module (4), sofern der Gesamt-Iststrom iN für eine vorgegebene Zeit (τ$_m$) ohne anzustoßen innerhalb des ersten Toleranzbandes(+ε bzw. -ε) verbleibt.

7. Verfahren nach einem der vorhergehenden Ansprüche,
**dadurch gekennzeichnet,**
**daß**, sofern ein Strom (iN) eines Moduls (4) einen zulässigen Maximalwert (imax) betragsmäßig überschreitet, alle Module (4) des betreffenden Parallelzweiges p mit dem Stellbefehl S$_{pj}$ = 1 ("eingangsseitig <u>nicht</u> kurzgeschlossen") beaufschlagt werden.

8. Verfahren nach einem der vorhergehenden Ansprüche,
**dadurch gekennzeichnet,**
**daß** die Schaltfrequenz der Strom-Schaltregelung (6) in einem geschlossenen Regelkreis kontrolliert wird, indem die Summe der Umschaltung aller Module (4) überwacht wird.

9. Verfahren nach einem der vorhergehenden Ansprüche,
**dadurch gekennzeinet,**
daß bei eingangsseitigem Wechselspannungsbetrieb des Stromrichters (2) ein entsprechender oszillierender Sollwert (iN*) des eingespeisten Gesamtstromes durch Multiplikation eines der Netzspannung proportionales oder phasensynchronen Signals mit einem für den Stromeffektivwert- oder Scheitelwert maßgeblichen Sollwert gewonnen wird.

10. Verfahren nach einem der vorhergehenden Ansprüche,
**dadurch gekennzeichnet,**
**daß** die Strom-Schaltregelung (6) mit programmierbaren Logikbausteinen realisiert wird.

11. Verfahren nach Anspruch 10,
**dadurch gekennzeichnet,**
**daß** als Schaltfrequenzregler ein I-Glied verwendet wird, welches als Zähler (14) aufgebaut ist und zusammen mit der Strom-Schaltlogik (12) auf programmierbaren Logikbauelementen realisiert ist.

12. Verfahren nach einem der vorhergehenden Ansprüche,
**gekennzeichnet durch,**
die Anwendung eines aus 6 Modulen (4) aufgebauten Mehrsystem-Bordnetzumrichters mit den Konfigurationen: 1x6 Module (ein "Parallelzweig" von 6 reihengeschalteten Modulen), 2x3 Module (2 Parallelzweige mit je 3 reihengeschalteten Modulen) und 3x2 Module (3 Parallelzweige mit je 2 reihengeschalteten Modulen) über der Netzeingangsspannung.

**Claims**

1. A method for establishing command controls for a power converter (2) having a modular design, whose modules (4), which can be short-circuited on the input side by control commands, are grouped according to a found input voltage system for the purpose of providing a constant output voltage in series and/or parallel switching on the primary side and are regulated in a coordinated manner by means of a single current control regulation (6), which is superimposed by an output voltage regulation (8), whereby the control commands for the modules are generated for the current regulator error (iN* - iN) of the total current (iN) flowing through the power converter (2) when an upper threshold value (R+: | iN | > | iN* + ε | ) or a lower threshold value (R-: | iN | < | iN* - ε |) of a tolerance band (2ε) which can be preset in width is reached, with the following two-step strategy for selecting a module (4) which is commutated when one of the two threshold values (| iN*+ε | or | iN*-ε |) is reached:

   **a) select parallel branch p of the modules (4):**

   - select branch p with the least number of modules (4), to which the "not short-circuited on the input side" (Spj = 1 for R+) switching state or "short-circuited on the input side" (Spj = 0 for R-) switching state applies;
   - if several branches with the equally least number of modules (4) are available, to which the above-mentioned switching statuses apply, select the branch p which is flowed through by the largest partial current iNp for R+ or the smallest partial current for R- with respect to the absolute value of the partial current;

**b) select series position r of the module (4) inside the selected parallel branch p:**

- select series position r of the module (4) which is already for the longest time in the state "short-circuited on the input side" (Spr = 0 for R+) or "not short-circuited on the input side" (Spr = 1 for R-), at which point the commutation of the selected module takes place.

2. The method as claimed in Claim 1, **characterised in that** in selection step b for the selection of the module (4) to be commutated the series position r of that module (4) whose initial current is greatest for R+ or least for R- is selected.

3. The method as claimed in Claim 1, **characterised in that** with use of modules (4) which are designed as converter with voltage intermediate circuit (10), in selection step b for the selection of the module (4) to be commutated the series position r of that module (4) whose internal intermediate circuit voltage Ud is greatest for R+ or least for R- is selected.

4. The method as claimed in any one of the foregoing claims, **characterised in that** the circuit logic L (12) after each commutation of a module (4) for a predetermined period ($\tau\omega$) is locked for identical initiation on the tolerance band.

5. The method as claimed in Claim 4, **characterised in that** a second tolerance band (+$\varepsilon$2 or -$\varepsilon$2) which is broader compared to the first tolerance band (+$\varepsilon$ or -$\varepsilon$) is provided for the total current (iN) flowing through the power converter (2) which when it is reached independent of a locking triggers another commutation and thus limits overshooting out of the tolerance band (+$\varepsilon$ or -$\varepsilon$) during the locking period ($\tau\omega$).

6. The method as claimed in any one of the foregoing claims, **characterised by** forced commutation of the modules (4), inasfar as the total actual current iN remains for a predetermined period ($\tau\omega$) inside the first tolerance band (+$\varepsilon$ or -$\varepsilon$) without initiating.

7. The method as claimed in any one of the foregoing claims, **characterised in that**, inasfar as an absolute value of a current (iN) of a module (4) exceeds a permissible maximum value (imax), all modules (4) of the parallel branch p in question are supplied with the control command Spj = 1 ("<u>not</u> short-circuited on the input side").

8. The method as claimed in any one of the foregoing claims, **characterised in that** the sampling frequency of the current control regulation (6) is controlled in a closed control circuit, **in that** the sum of the commutation of all modules (4) is monitored.

9. The method as claimed in any one of the foregoing claims, **characterised in that** when the power converter (2) is in alternating voltage mode on the input side a corresponding oscillating set value (iN*) of the fed total current is obtained by multiplication of a signal proportional to or phase-synchronous with the power supply with a set value which is decisive for the actual current value or peak value.

10. The method as claimed in any one of the foregoing claims, **characterised in that** the current control regulation (6) is realised with programmable logic modules.

11. The method as claimed in Claim 10, **characterised in that** an integral control member which is designed as a counter (14) and is realised together with the current control logic (12) on programmable logic modules, is used as sampling frequency regulator.

12. The method as claimed in any one of the foregoing claims, **characterised by** use of a multisystem on-board power converter made up of 6 modules (4) having the configurations: 1 x 6 modules (a "parallel branch" of 6 modules connected in series), 2 x 3 modules (2 parallel branches each with 3 modules connected in series) and 3 x 2 modules (3 parallel branches each with 2 modules connected in series) over the power input voltage.

**Revendications**

1. Procédé pour engendrer des commandes de réglage pour un convertisseur de courant (2) d'une construction modulaire, dont les modules (4) pouvant être court-circuités du côté de l'entrée par des commandes de réglage sont groupés dans un circuit série et/ou parallèle du côté primaire, en fonction du système de tension d'entrée trouvé en amont, pour qu'ils délivrent une tension de sortie constante et régulés de façon coordonnée au moyen d'un circuit de régulation de courant (6) auquel est superposé un régulateur de tension de sortie (8), procédé dans lequel les commandes de réglage pour les modules, en atteignant une valeur limite supérieure (R+ : | iN | > | iN* + $\varepsilon$ |) ou une valeur limite inférieure (R- : | iN | < | iN* -$\varepsilon$ |) d'une bande de tolérance dont la largeur (2 $\varepsilon$) peut être prédéterminée, pour l'erreur de régulation de courant (iN* - iN) du courant total (iN) traversant le convertisseur de courant (2), sont engendrées par une stratégie suivante en deux étapes pour sélectionner un module (4) qui est commuté lorsqu'une des deux valeurs limites (| iN* + ε | ou | iN* - ε |) est atteinte :

**a) sélectionner la branche parallèle p des modules (4) :**

- sélectionner la branche p ayant le nombre le plus faible de modules (4), pour lesquels s'applique l'état de commutation "non court-circuité du côté de l'entrée" (Spj = 1 pour R+) ou bien "court-circuité du côté de l'entrée" (Spj = 0 pour R-);
- dans le cas où plusieurs branches existent ayant le même nombre le plus faible de modules (4), pour lesquels les états de commutation précités s'appliquent, sélectionner la branche p qui est parcourue par le courant partiel le plus grand en grandeur pour R+ ou bien par le courant partiel le plus petit en grandeur iNp pour R-;

**b) sélectionner la position de rangée r du module (4) dans la branche parallèle p choisie :**

- sélectionner la position de rangée r du module (4), qui se trouve déjà depuis le plus longtemps dans l'état "court-circuité du côté de l'entrée" (Spr = 0 pour R+) ou "non court-circuité du côté de l'entrée" (Spr = 1 pour R-), à la suite de quoi la commutation du module sélectionné (4) se produit.

**2.** Procédé selon la revendication 1,
**caractérisé en ce que**,
dans l'étape de sélection b pour sélectionner le module à commuter (4), la position de rangée r du module (4) dont le courant de sortie est le plus grand pour R+ ou bien le plus petit pour R- est sélectionnée.

**3.** Procédé selon la revendication 1,
**caractérisé en ce que**,
lors de l'emploi de modules (4) qui sont construits sous la forme de convertisseurs de fréquence avec circuit intermédiaire de tension (10), dans l'étape de sélection b pour sélectionner le module (4) à commuter, le circuit série r dudit module (4) dont la tension de circuit intermédiaire interne $u_d$ est la plus grande pour R+ ou la plus petite pour R- est sélectionné.

**4.** Procédé selon l'une quelconque des revendications précédentes,
**caractérisé en ce que**,
la logique de commutation L (12) à chaque commutation d'un module (4) est verrouillée pendant un intervalle de temps (τw) pouvant être prédéterminé pour une atteinte similaire de la bande de tolérance.

**5.** Procédé selon la revendication 4,
**caractérisé en ce que**,
il est prévu une deuxième bande de tolérance (+ε2 respectivement -ε2) plus large que la première bande de tolérance (+ε, respectivement -ε) pour le courant total (iN) traversant le convertisseur de courant (2), qui déclenche indépendamment d'un verrouillage, une commutation supplémentaire lors de l'atteinte de cette première, et qui limite ainsi le surdépassement de la bande de tolérance (+ε respectivement -ε) pendant l'intervalle de temps de verrouillage (τw).

**6.** Procédé selon l'une quelconque des revendications précédentes,
**caractérisé
par** une commutation forcée des modules (4) dans la mesure où le courant réel total iN reste dans la première bande de tolérance (+ε, respectivement -ε) pendant une durée prédéterminée (τn) sans déclenchement.

**7.** Procédé selon l'une quelconque des revendications précédentes,
**caractérisé en ce que**,
dans la mesure où un courant (iN) d'un module (4) dépasse une valeur maximale admissible (imax) en grandeur, tous les modules (4) de la branche parallèle p concernée, sont activés par la commande de réglage Spj = 1 ("non court-circuité du côté de l'entrée").

**8.** Procédé selon l'une quelconque des revendications précédentes,
**caractérisé en ce que**,
la fréquence de commutation du circuit régulateur de courant (6) est asservie dans une boucle de régulation fermée, en surveillant la somme de la commutation de tous les modules (4).

**9.** Procédé selon l'une quelconque des revendications précédentes,
**caractérisé en ce que**,
lors d'un fonctionnement en tension alternative du côté de l'entrée du convertisseur de courant (2), une valeur de consigne (iN*) oscillante appropriée du courant total alimenté est obtenue par multiplication d'un signal proportionnel ou synchronisé en phase avec la tension du secteur par une valeur de consigne critique pour la valeur efficace ou la valeur de crête du courant.

**10.** Procédé selon l'une quelconque des revendications précédentes,

**caractérisé en ce que**,
le circuit régulateur de courant (6) est réalisé avec des composants logiques programmables.

11. Procédé selon la revendication 10,
**caractérisé en ce que**,
un élément intégrateur est employé en tant que régulateur de fréquence de commutation, qui est construit sous la forme de compteur (14) et qui est réalisé sur des éléments de logique programmables, conjointement avec la logique de commutation de courant (12).

12. Procédé selon l'une quelconque des revendications précédentes,
**caractérisé par**
l'emploi d'un convertisseur de fréquence de réseau de bord à système multiple construit à partir de 6 modules (4) ayant les configurations : un module 1x6 (une "branche parallèle" avec 6 modules placés en série), des modules 2x3 (deux branches parallèles avec respectivement 3 modules montés en série) et des modules 3x2 (trois branches parallèles avec 2 modules montés en série) sur la tension d'entrée du réseau.

Fig. 1a

Fig. 1b

Fig. 1c

Fig. 2

Fig. 3a

Fig. 3b

Fig. 4